# NEUE EUROPÄISCHE PATENTSCHRIFT

(11) **EP 0 512 295 B2**
(45) Veröffentlichungstag und Bekanntmachung des Hinweises auf die Entscheidung über den Einspruch: **21.11.2001**
(45) Hinweis auf die Patenterteilung: 18.10.1995
(21) Anmeldenummer: 92106609.8
(22) Anmeldetag: 16.04.1992
(51) Int. Cl.: F16F 15/16, B21D 22/16

(54) **Verfahren zur Herstellung eines Viskositäts-Drehschwingungsdämpfers**
Process for the fabrication of a torsional vibration viscous damper
Procédé pour la fabrication d'un amortisseur fluide de vibrations torsionelles

(30) Priorität: 10.05.1991 DE 4115423
(43) Veröffentlichungstag der Anmeldung: 11.11.1992
(73) Patentinhaber: HASSE & WREDE GmbH, D-12347 Berlin (DE)
(72) Erfinder: Pape, Rolf, W-1000 Berlin 37 (DE)
(74) Vertreter: Specht, Peter, Dipl.-Phys.

(56) Entgegenhaltungen:
- EP-A- 0 062 685
- EP-A- 0 143 032
- EP-A- 0 302 283
- EP-A- 0 379 835
- WO-A-90/13758
- DE-A- 2 455 365
- DE-A- 2 745 508
- US-A- 2 075 294
- US-A- 2 722 138
- US-A- 3 540 395
- ZEITSCHRIFT FUER WIRTSCHAFTLICHE FERTIGUNG Bd. 81, Nr. 1, 1. Januar 1986,MUENCHEN,BRD Seiten 54 - 58 DIPL.ING.R.FALB 'metalldruecken-eine wirtschaftliche alternative'

## Beschreibung

Die Erfindung betrifft ein Verfahren zur Herstellung eines Drehschwingungsdämpfers gemäß dem Gattungsbegriff des Patentanspruches 1.

Viskositäts-Drehschwingungsdämpfer der in Rede stehenden Bauart sind in vielfältiger konstruktiver Auslegung bekannt; desgleichen sind verschiedene Fertigungsverfahren bekannt, nach welchen derartige Dämpfer gefertigt werden. Bei der Herstellung derartiger Dämpfer wird im allgemeinen ein Gehäusekörper gebildet, zu welchem eine Arbeitskammer zur Aufnahme eines seismischen Ringes und eines viskosen Dämpfungsmediums gehört. Als weiteres Bauteil ist im allgemeinen ein Deckel vorgesehen, welcher nach der Fertigung des Gehäusekörpers mit diesem z.B. im Schweißverfahren verbunden wird. Weitere, an sich bekannte Verfahrensschritte sehen vor, daß in die einen eingelegten seismischen Ring enthaltende Arbeitskammer durch eine im Deckel befindliche Öffnung das viskose Arbeitsmedium eingefüllt wird, wonach bei gefüllter Arbeitskammer die Öffnung im Deckel wieder verschlossen wird. Auf diese Weise fertiggestellte Drehschwingungsdämpfer finden vielfältige Anwendung zur Dämpfung von Drehschwingungen sich drehender Maschinenteile, so werden sie z.B. an einer zu bedämpfenden Kurbelwelle angeschraubt oder in sonstiger Weise an dieser befestigt.

Drehschwingungsdämpfer der vorstehend genannten Bauart und Funktionsweise wurde bisher aus Gußeisen oder aus Walzstahl in tiefgezogener oder geschweißter Ausführung hergestellt, wobei eine maschinelle Nachbearbeitung auf die gewünschten Abmessungen in jedem Fall erforderlich war. Des weiteren wurden sogenannte Hydroformtechniken entwickelt (US-PS 3,512,612), welche jedoch ziemlich grobe Toleranzen und in der Folge die Verwendung von Dämpfungsmedien ungewöhnlich hoher Viskosität beinhalteten.

Die Weiterentwicklung moderner Arbeitstechniken, wie sie z.B. auch bei der Fertigung von Kupplungsgehäusen angewandt werden (US-PS 4,056,291), führte auch bei Dämpfergehäusen zu Fertigungsverfahren, bei welchen mittels mit hoher Geschwindigkeit laufender Umformmaschinen Gehäusekörper für Drehschwingungsdämpfer bei äußerster Genauigkeit hergestellt werden können (EP-A-0 302 283). Den Fertigungsverfahren mit modernen Umformmaschinen ist im allgemeinen gemeinsam, daß auf kostenaufwendige Nachbearbeitungen verzichtet werden soll, es sollen im besonderen sehr hohe Produktionsleistungen bei Einhaltung engster Toleranzen erzielbar sein. Neuartige Drück- bzw. Umformverfahren der vorstehend genannten Art beinhalten die Verwendung von Dornkörpern (Spanndorn und Drückdorn), zwischen welchen in einer Drückbank das Ausgangsmaterial in Form einer Blechronde aus kaltgewalztem, beruhigtem Stahlblech eingespannt wird. Auf der Drückbank erhält die Blechronde die Form eines tiefen Topfes, wobei der Außenmantel des Topfes, welcher zu den Scherflächen im Dämpfergehäuse gehört, eine prägepolierte, kaltverfestigte Oberfläche erhält. An einem weiteren Paar von Dorn- bzw. Kernkörpern wird nachfolgend der Topfmantel in die Gestalt des Dämpfergehäuses gedrückt, also umgeformt. Daran anschließend erfolgt die Anformung einer Anlage für den Dämpferdeckel, welcher durch Laserschweißen, Heißkleben oder durch Dichtringe mit Punktschweißung mit dem Gehäusekörper öldicht verbunden wird.

Das Fertigungsverfahren der vorstehend erläuterten Art erfordert wenigstens die Verwendung zweier Paarungen von Dornkörpern, wenn, ausgehend von einer Blechronde, ein tiefer Topf und aus diesem nachfolgend das Dämpfergehäuse gedrückt bzw. umgeformt wird. Das Umformen des Gehäuses zur Gestaltung der Arbeitskammer sieht vor, daß mittels Drückrollen wenigstens zwei Richtungswechsel der Umformung vollzogen werden, was bei der Neigung des Stahlbleches, zurückzufedern, problematisch ist angesichts der Forderung nach maßhaltigen Gehäusekörpern.

Mit derartigen Verfahren (EP-A-0 302 283) gefertigte Dämpfergehäuse besitzen eine Formgebung, bei welcher sich der Deckel parallel zum radial inneren Befestigungsflansch des Gehäusekörpers erstreckt und mit diesem z.B. durch Schweißung verbunden ist. Sowohl der Deckel als auch der Befestigungsflansch weisen folglich miteinander in Deckung befindliche Teilkreise von Bohrungen zur Aufnahme der Befestigungsschrauben auf, mittels welchen der Dämpfer an einem zu dämpfenden Maschinenteil zu befestigen ist.

Davon ausgehend besteht die Aufgabe der Erfindung darin, ein Verfahren zur Herstellung eines Drehschwingungsdämpfers zu schaffen, welches in Weiterbildung des Umform- bzw. Drückverfahren dazu beiträgt, daß der erforderliche Aufwand, insbesondere im Hinblick auf die geforderten Werkzeugwechsel und benötigten Spannungen reduziert werden kann. Es soll insbesondere möglich sein, mit einfachen Verfahrensschritten und ohne aufwendige Formgebung von Kern- oder Dornkörpern die endgültige Kontur des Gehäusekörpers festzulegen, so daß vorzugsweise keine maschinelle Nachbearbeitung erforderlich wird. Bei Verwendung eines derartigen Umform- bzw. Drückverfahrens soll es auch ermöglicht werden, am Drehschwingungsdämpfer, d.h. am Gehäusekörper desselben, radial innenseitig einen Befestigungsflansch auszubilden, welcher ausreichende bauliche Festigkeit besitzt und demnach die unterstützende Absteifung durch einen Deckelkörper entbehrlich macht. Auf diese Weise soll es auch ermöglicht sein, einen Deckelaufbau vorzusehen, welcher sich ausschließlich auf die Abmessungen der eigentlichen Arbeitskammer des Dämpfergehäuses beschränkt.

Zur Lösung dieser Aufgabe dienen die Merkmale nach dem Kennzeichnungsteil des Patentanspruches 1.

Mit Hilfe des als Teilschritt eine bemessene Spaltung der Blechronde beinhaltenden Herstellungsverfahrens ist es ermöglicht, mit lediglich zwei Spannungen der Dornkörper unter Verwendung von insgesamt lediglich drei Dornkörpern auszukommen; desgleichen erübrigt sich die Verwendung eines Dornkörpers zur Umformung in zwei Richtungen, und demnach auch der Einsatz verhältnismäßig komplizierter Führungen und Steuerungen für Drückrollen, da der den Innenmantel der Arbeitskammer bildende Abschnitt der Blechronde aus dieser im Wege eines Spaltvorgangs herausgeschnitten wird und demnach eine U-förmige, zweifache Umformung mittels einer diesem Richtungswechsel folgenden Drückrolle nicht erforderlich ist. Da die Wandstärke der Blechronde so dimensioniert werden kann, daß die im Bereich des Befestigungsflansches erforderliche Wandstärke vorgegeben ist, kann auf die bisher erforderliche Verstärkung des Befestigungsflansches z.B. durch Anlage eines Deckels, verzichtet werden.

Vorteilhafte Ausgestaltungen und Weiterbildungen des Verfahrens sind in den weiteren Patentansprüchen aufgeführt.

Die Erfindung ist nachfolgend anhand von Ausführungsbeispielen unter Bezugnahme auf die beigefügte Zeichnung erläutert.
- Fig.1: gibt in halbierter Schnittansicht den nach dem Verfahren gefertigten Gehäusekörper des Drehschwingungsdämpfers gemäß der Erfindung wieder; und
- Fig.2-6: sind schematische Teilansichten des erfindungsgemäßen Verfahrens zur Herstellung des in Fig.1 dargestellten Gehäusekörpers eines erfindungsgemäßen Drehschwingungsdämpfers.

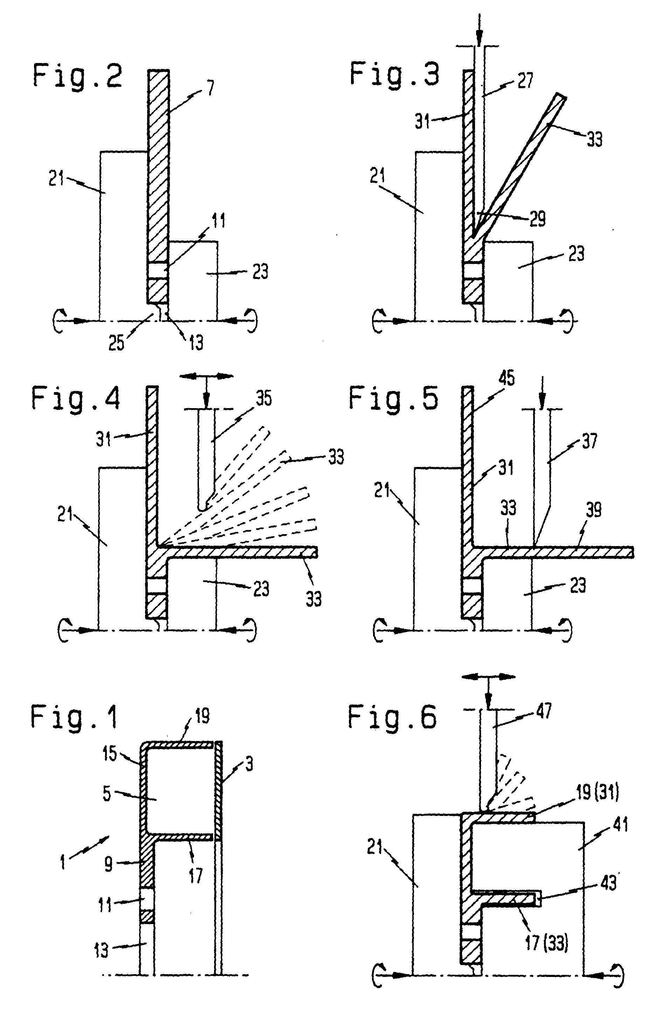

In Fig.1 der Zeichnung ist in halbierter Schnittansicht ein Drehschwingungsdämpfer dargestellt, welcher aus einem Gehäusekörper 1 und einem mit dem Gehäusekörper zu verbindenden Deckel 3 besteht; es handelt sich hierbei um einen Viskositäts-Drehschwingungsdämpfer der nach dem Scherfilm-Prinzip arbeitenden Bauart mit einer am Gehäusekörper 1 gebildeten Arbeitskammer 5, in welcher sich ein (in der Zeichnung nicht dargestellter) seismischer Ring bzw. Schwungringkörper von an sich bekannter Konstruktion und Wirkungsweise befindet.

Der Gehäusekörper 1 wird in nachfolgend unter Bezugnahme auf die Figuren 2-6 erläuterter Weise aus einer Blechronde 7 gefertigt (Fig.2), welche vorzugsweise aus kaltgewalztem Stahlblech besteht. Es kann sich hier z.B. um einen Feinblechkörper geeigneter Dicke aus beruhigtem Stahl mit einem geringen Aluminiumanteil handeln. Die Erfindung ist jedoch nicht auf bestimmte Materialzusammensetzungen derartiger Ronden beschränkt, sondern ist im weitesten Umfang auch mit jeglichen Materialien verwirklichbar, welche dem nachfolgend erläuterten Verfahren unterzogen werden können.

Der Gehäusekörper 1 weist gemäß Fig.1 einen radial sich erstreckenden Befestigungsflansch 9 auf, an welchem auf einem Teilkreis Bohrungen 11 für (nicht dargestellte) Befestigungsschrauben und eine Mittenbohrung 13 ausgebildet sind. An den Befestigungsflansch grenzt radial sich erstreckend die Rückwand 15 der Arbeitskammer 5, welche radial innenseitig von einem zylindrischen Innenmantel 17 und radial außenseitig von einem gleichfalls zylindrischen Außenmantel 19 begrenzt ist. Mit Hilfe der Bohrungen 11 und der (nicht dargestellten) Befestigungsschrauben wird der Drehschwingungsdämpfer an einem rotierenden, zu dämpfenden Maschinenteil befestigt, z.B. an einer zu dämpfenden Kurbelwelle eines Kraftfahrzeugs. Anstelle der Befestigungsschrauben können auch andere Verbindungselemente vorgesehen sein. Die Mittenbohrung 13 wirkt als Zentrierbohrung für das nachfolgend beschriebene Fertigungsverfahren und kann auch zur Aufnahme eines Zentrieransatzes des zu dämpfenden Maschinenteils dienen. Gemäß Darstellung in Fig.1 ist der Befestigungsflansch 9 dicker dimensioniert als die Rückwand 15, was in vorteilhafter Weise zu einem stabilen Aufbau des Dämpfergehäuses, insbesondere im Hinblick auf die dynamischen Beanspruchungen, beiträgt.

Der in Fig.1 in Teilschnittansicht wiedergegebene Gehäusekörper wird gemäß der Erfindung mittels einer Umform- bzw. Drückmaschine hergestellt, ohne daß es erforderlich wäre, komplex ausgebildete und demnach teure Spann- und Drückdorne an der Umformmaschine zu verwenden. Das Ausgangsmaterial des Gehäusekörpers ist in bekannter Weise aus einer Blechronde 7 gebildet, welche gestanzt oder im Laserschnittverfahren hergestellt werden kann. Hierbei werden aus einer Blechtafel mit einer Stärke von z.B. 8 mm Streifen geschnitten, welche in Quadrate unterteilt werden. Aus diesen Quadraten werden jeweils Ronden mit Innenloch geschnitten; auch die Teilkreisbohrungen können bereits während dieses Verfahrensschritts in den Blechronden gefertigt werden.

Für den ersten Arbeitsgang wird die Blechronde 7 zwischen den Dornen 21 und 23 einer Drückbank eingespannt, wobei einer der Dornkörper in bekannter Weise als Drückdorn wirkt. Am Dorn 21 ist gemäß Fig.2 ein Zentrieransatz 25 ausgebildet, welcher in die Mittenbohrung 13 der Blechronde eingreift und diese auf der Drückbank fixiert; die beiden Dorne werden unter gegenseitiger Verspannung in Umdrehung versetzt, wonach gemäß Fig.3 im weiteren Verfahrensschritt am Material der Blechronde ein Spaltvorgang vollzogen wird. Hierzu wird bei sich drehenden, die Blechronde verspannenden Dornen 21 und 23 radial von außen eine sich gleichfalls drehende Schneidrolle 27 mit ihrer scharf zulaufenden Schneidkante 29 in das Material der Ronde gedrückt, so daß im Laufe des Spaltvorganges ein radial sich erstreckender Rondenabschnitt 31 und ein weiterer, durch die Formgebung der Schneidkante sich abspaltender Rondenabschnitt 33 gebildet werden. Die Schnittiefe der Schneidrolle ist vorzugsweise auf die radiale Erstreckung, d.h. auf den Außenumfang des Dorns 23 abgestimmt, so daß der Rondenabschnitt 33 in nachfolgend unter Bezugnahme auf Fig.4 ersichtlicher Weise gegenüber dem Außenumfang des Dorns umgeformt werden kann. Dies geschieht mit Hilfe einer sich drehenden Drückrolle 35, welche nach dem Herausziehen der Schneidrolle 27 an der Innenseite des Rondenabschnitts 33 einwirkt, wobei radial nach innen gerichtete Kräfte und axiale Kräfte in an sich bekannter Weise während dieses Drückvorganges zur Anwendung gelangen, bis der Rondenabschnitt gemäß Fig.4 am Außenumfang des Dorns 23 umgeformt ist. Der Dorn 23 wirkt hierbei als sogenannter Drückdorn, an welchem die Umformung vollzogen wird. Durch die anhand von Fig.3 und 4 ersichtliche Schrittfolge der Umformung ist ohne jeglichen Einsatz eines kompliziert ausgebildeten Dornkörpers die Innenwandung der Arbeitskammer 5 festgelegt, wobei nach einem Werkzeugwechsel gemäß Fig.5 in einem weiteren Arbeitsschritt überschüssiges Material des Rondenabschnitts 33 abgestochen wird. Dies geschieht mittels einer vorzugsweise gleichfalls in Umdrehung befindlichen Schneidrolle 37, welche in einer der Dickenabmessung des Dorns 23 entsprechenden Position unter Ausübung radial nach innen gerichteten Drucks am Rondenabschnitt 33 zur Wirkung gebracht wird. Das überstehende Teil 39 des Rondenabschnitts wird hierdurch in einfacher Weise abgetrennt.

An den unter Bezugnahme auf Fig.5 erläuterten Verfahrensabschnitt schließt sich nunmehr ein Spannungswechsel an, d.h. der Dorn 23 wird durch einen Dorn 41 ersetzt, welcher seiner Funktion nach als Drückdorn vorgesehen ist. Gemäß Darstellung weist der Dorn 41 eine Formgebung auf, welche der bereits gefertigten Kontur des teilfertigen Werkstücks angepaßt ist. Demgemäß besitzt der Dorn 41 eine Ausnehmung 43, welche den Abmessungen des beim fertigen Gehäusekörper als Innenmantel 17 vorgesehenen Teils genau angepaßt ist. In gleicher Weise wie bei den vorstehend beschriebenen Arbeitsschritten üben die Dorne 21 und 41 bei gleichzeitiger Drehung eine Spannkraft gegenüber dem teilgefertigten Werkstück aus, wobei der über das radiale Außenmaß des Dorns 21 (Fig.5) überstehende Teil 45 des Rondenabschnitts 31 mit Hilfe einer weiteren Drückrolle 47 in der aus Fig.6 ersichtlichen Weise am Außenumfang des Dorns 41 umgeformt wird, derart, daß der Außenmantel 19 des Gehäuseköpers 1 besteht. Die Fertigung des Gehäusekörpers 1 ist hierdurch im wesentlichen abgeschlossen, wobei lediglich ein einziger Wechsel einer der Dornkörper beim Übergang vom Verfahrensschritt nach Fig.5 zum Verfahrensschritt nach Fig.6 erforderlich war.

In nachfolgenden Verfahrensschritten kann ein Plandrehen der Gehäusestirnflächen erfolgen; desgleichen ist es möglich, die Teilkreisbohrungen für die Aufnahme der Befestigungsschrauben zu bohren, falls dies nicht bereits beim Zuschnitt der Blechronde geschehen sein sollte.

Zur Fertigstellung des Drehschwingungsdämpfers schließen sich nachfolgend weitere, an sich bekannte Verfahrensschritte an, welche darin bestehen, daß die seismische Masse bzw. der Schwungring in die Arbeitskammer 5 des Gehäusekörpers eingelegt wird, wonach der zuvor maßgenau gestanzte Deckel auf die offene Seite des Gehäusekörpers 1 aufgelegt wird (Fig.1). Die Befestigung des Deckels 3 geschieht durch Laserschweißen, durch Heißkleben oder durch Dichtringe mit Punktschweißung, wobei in jedem Fall eine öldichte Verbindung herbeigeführt wird. Im Deckel befindet sich wenigstens eine vorangehend gebohrte Einfüllöffnung für Silikonöl in einer der Arbeitskammer 5 gegenüberliegenden Position, so daß nach Befestigung des Deckels das Einfüllen mit Silikonöl vorgenommen wird. Das Einfüllen kann bei gleichzeitigem Anlegen von Vakuum an einer weiteren Öffnung des Deckels geschehen. Nachdem eine ausreichende Menge viskosen Dämpfungsmediums in die Arbeitskammer 5 eingefüllt ist, werden die Füll- bzw. Vakuumstutzen abgenommen, wonach die zum Einfüllen und zum Anlegen des Vakuums vorgesehenen Öffnungen mit geeigneten Schweißstopfen oder dgl. verschlossen werden.

Die Erfindung ist nicht auf die im einzelnen wiedergegebene konstruktive Ausführungsform des Gehäusekörpers eines Drehschwingungsdämpfers beschränkt, d.h. die dem Herstellungsverfahren innewohnende Lehre der Verwendung einer Spaltung als Teilschritt in Verbindung mit nachfolgender Drück-Umformung kann auch bei Drehschwingungsdämpfer-Konstruktionen komplexeren Aufbaues zur Anwendung gebracht werden. Auch ist es möglich, derartige Drehschwingungsdämpfer zugleich als Riemenscheibe auszubilden. Bei einer derartigen Auslegung dient der Außenumfang des Außenmantels 19 des Gehäusekörpers zur Ausbildung sogenannter Vielfach-Keilprofile, wie sie bei Poly-V-Riemenscheiben z.B. bekannt sind. Drehschwingungsdämpfer mit einer derartigen zusätzlichen Funktion als Riemenscheiben sind insbesondere zum Einsatz für die Automobilindustrie vorgesehen.

### Bezugszeichenliste

- 1: Gehäusekörper
- 3: Deckel
- 5: Arbeitskammer
- 7: Blechronde
- 9: Befestigungsflansch
- 11: Bohrung
- 13: Mittenbohrung
- 15: Rückwand
- 17: Innenmantel
- 19: Außenmantel
- 21: Dorn
- 23: Dorn
- 25: Zentrieransatz
- 27: Schneidrolle
- 29: Schneidkante
- 31: Rondenabschnitt
- 33: Rondenabschnitt
- 35: Drückrolle
- 37: Schneidrolle
- 39: Teil
- 41: Dorn
- 43: Ausnehmung
- 45: Teil
- 47: Drückrolle

## Patentansprüche

1. Verfahren zur Herstellung eines Viskositäts-Drehschwingungsdämpfers, mit einer am Dämpfergehäuse ausgebildeten, mit einem viskosen Dämpfungsmittel gefüllten Arbeitskammer (5), in welcher sich ein seismischer Ring befindet, wobei der Gehäusekörper (1) des Drehschwingungsdämpfers aus einer vorzugsweise aus Tiefziehblech bestehenden Blechronde (7) gefertigt wird und die Formgebung des Gehäusekörpers (1) in einer Drückbank im Drück-Umformverfahren, geschieht, **dadurch gekennzeichnet, daß** die Arbeitskammer eine Rückwand (15), einen einstückig mit der Rückwand (15) verbundenen Innenmantel (17) und einen einstückig mit der Rückwand (15) verbundenen Außenmantel (19) aufweist, wobei in einem Zwischenschritt alle Wandteile der Arbeitskammer (5) durch ein Spaltverfahren an der Blechronde (7) gewonnen werden.

2. Verfahren nach Anspruch 1, **gekennzeichnet durch** folgende Verfahrensschritte:
a) die Blechronde (7) wird zwischen zwei Dorne (21, 23) der Drückbank eingespannt und mit diesen in Umdrehung versetzt;
b) die Blechronde (7) wird von ihrem Außenumfang her mittels eines Spaltwerkzeugs auf einem Teil ihrer radialen Erstrekkung in zwei an ihrem Spaltgrund miteinander in Verbindung verbleibende, ringscheibenförmige Rondenabschnitte (31, 33) unterteilt; und
c) die Rondenabschnitte (31, 33) werden nachfolgend auf der Drückbank in einer die Arbeitskammer (5) des Gehäusekörpers (1) bildenden Weise umgeformt.

3. Verfahren nach Anspruch 2, **dadurch gekennzeichnet, daß** die Bearbeitung der Blechronde (7) zwischen zwei als Drückdorn und Spanndorn ausgebildeten Dornkörpern unterschiedlicher radialer Erstreckung erfolgt, derart, daß beim nachfolgenden Spalten gemäß Verfahrensteilschritt b einer der Rondenabschnitte (31, 33) in Richtung des Dornkörpers kürzerer radialer Abmessung umgebogen wird und die nachfolgende Umformung durch Drücken gemäß Verfahrensteilschritt c an der Außenkontur des radial kürzeren Dornkörpers, des Drückdorns erfolgt, während der dem radial längeren Dornkörper zugewandte Rondenabschnitt im Verlauf des Verfahrensteilschrittes b in seiner radialen Erstreckung verbleibt.

4. Verfahren nach Anspruch 2, **dadurch gekennzeichnet, daß** das Spalten in zwei Rondenabschnitte (31, 33) mit Hilfe einer sich drehenden und gleichzeitig radial nach innen in Richtung der Blechronde sich bewegenden Schneidrolle (27) erfolgt.

5. Verfahren nach Anspruch 2 oder 3, **dadurch gekennzeichnet, daß** der nach dem Spalten an die Außenkontur des radial kürzeren Dornkörpers angelegte Rondenabschnitt (33) mittels einer Drückrolle (35) senkrecht zur Blechronde (7) umgeformt wird, wonach entsprechend der axialen Erstreckung des Dornkörpers vom Rondenabschnitt (33) mittels einer Schneidrolle (37) ein Teil abgetrennt wird, wodurch der Rondenabschnitt als Innenmantel (17) der zu fertigenden Arbeitskammer (5) des Gehäusekörpers verbleibt.

6. Verfahren nach Anspruch 5, **gekennzeichnet durch** folgende weitere Verfahrensschritte:
nach dem Abstechen des überstehenden Teils des Rondenabschnittes wird der diesen Rondenabschnitt (33) bei der vorangehenden Umformung abstützende Dornkörper in einem Spannungswechsel **durch** einen Dornkörper (41) ersetzt, welcher in einer Ausnehmung den senkrecht zur Blechronde (7) sich erstreckenden Rondenabschnitt (33) aufnimmt und eine derartige radiale Erstreckung besitzt, daß der radial verbleibende Rondenabschnitt (31) mittels einer Drückrolle (47) am Dornaußenumfang umgeformt wird, derart, daß der Außenmantel (19) der Arbeitskammer (5) gebildet ist.

7. Verfahren nach einem der vorangehenden Ansprüche, **gekennzeichnet durch** folgende weitere Verfahrensschritte:
a) nach der die Formgebung der Arbeitskammer (5) beendenden Umformung des äußeren, als Außenmantel (19) bestehenden Rondenabschnittes (31) wird der Gehäusekörper (1) aus der Spannung der Dornkörper herausgenommen;
b) in die zwischen Innen- und Außenmantel bestehende Arbeitskammer wird ein seismischer Ring eingelegt, wonach ein vorzugsweise gestanzter Deckel (3) von Ringform auf die offene Seite der Arbeitskammer (7) aufgelegt und mit dieser in bekannter Weise **durch** Schweißverfahren verbunden wird; und
c) nachfolgend wird **durch** eine im Deckel (3) befindliche Füllöffnung viskoses Dämpfungsmedium in die Arbeitskammer (7) eingefüllt, wonach die Öffnung geschlossen wird.

8. Verfahren nach einem der vorangehenden Ansprüche, **dadurch gekennzeichnet, daß** der Außenumfang des Gehäusekörpers (1) als Keilriemenscheibe, vorzugsweise im Umformverfahren als Vielfach-Keilprofil-Riemenscheibe ausgebildet wird.

## Claims

1. Method of manufacturing a viscous torsional vibration damper, comprising a working chamber (5) formed on the damper housing and filled with a viscous damping medium, in which a seismic ring is disposed, with the housing body (1) of the torsional vibration damper being made from a round sheet-metal plate (7) preferably consisting of a deep-drawing steel sheet, and with the shaping of said housing body (1) taking place in a spinning lathe in a compressive forming process, **characterized in that** said working chamber comprises a rear wall (15), an inner casing (17) integrally connected to said rear wall (15) and an outer casing (19) integrally connected to said rear wall (15), wherein, in an intermediate step, all wall parts of said working chamber (5) are obtained by a splitting process on said round sheet-metal plate (7).

2. Method according to Claim 1, **characterized by** the following steps:
a) the round sheet-metal plate (7) is clamped between two mandrels (21, 23) of the spinning lathe and is set in rotation therewith;
b) the round sheet-metal plate (7) is divided, by means of a splitting tool, from its periphery, for a portion of its radial extent, into two disc-shaped round portions (31, 33) which remain connected to one another at the bottom of their split; and
c) the round portions (31, 33) are subsequently formed on the spinning lathe into a working chamber (5) of the housing body (1).

3. Method according to Claim 2, **characterized in that** the processing of the round sheet-metal plate (7) takes place between two mandrel bodies of different radial extents, formed as a pressure mandrel and a tensioning mandrel in a manner such that, during the subsequent splitting according to step (b), one of the round portions (31, 33) is bent towards the mandrel body with the shorter radial dimension and the subsequent forming by compression according to step (c) takes place on the outer profile of the radially shorter mandrel body of the pressure mandrel whilst the round portion facing the radially longer mandrel body remains extending radially during the course of step (b).

4. Method according to Claim 2, **characterized in that** the splitting into two round portions (31, 33) takes place with the aid of a cutting wheel (27) which rotates and simultaneously moves radially inwardly of the round sheet-metal plate.

5. Method according to Claim 2 or Claim 3, cbaracterized in that the round portion (33) which, after splitting is adjacent the outer profile of the radially shorter mandrel body is formed so as to be perpendicular to the round sheet-metal plate (7) by means of a pressure roller (35), after which a portion is removed from the round portion (33) according to the axial extent of the mandrel by means of a cutting wheel (37), the round portion remaining as the inner casing (17) of the working chamber (5) to be produced in the housing body.

6. Method according to Claim 5, **characterized by** the following further steps: after the projecting part of the round portion has been cut off, the mandrel body supporting this round portion (33) during the previous forming is replaced in a clamping exchange by a mandrel body (41) which houses, in a recess, the round portion (33) extending perpendicular to the round sheet-metal plate (7) and is of a radial extent such that the round portion (31) which remains radial is formed on the outer periphery of the mandrel by means of a pressure roller (47) in a manner such as to form the outer casing (19) of the working chamber (5).

7. Method according to any one of the preceding claims, **characterized by** the following further steps:
a) after the forming of the outer round portion (31) constituting the outer casing (19) which completes the shaping of the working chamber (5), the housing body (1) is released from the mandrel bodies;
b) a seismic ring is inserted in the working chamber existing between the inner and outer casings, after which an annular cover (3), preferably stamped, is placed on the open side of the working chamber (7) and is connected thereto by welding in known manner, and
c) the working chamber (7) is then filled with a viscous damping medium through a filling opening disposed in the cover (3), after which the opening is closed.

8. Method according to any one of the preceding claims, **characterized in that** the periphery of the housing body (1) is formed as a V-belt pulley, preferably during the forming process, as a V-belt pulley with a multiple V-shaped profile.

## Revendications

1. Procédé pour la fabrication d'un amortisseur de vibrations torsionnelles à fluide visqueux, comportant un compartiment de travail (5) formé sur le carter de l'amortisseur et rempli d'un fluide d'amortissement visqueux, dans lequel est disposé un anneau séismique, le corps de carter (1) de l'amortisseur de vibrations torsionnelles étant fabriqué à partir d'un rond de tôle (7) constitué de préférence par la tôle d'emboutissage, et le façonnage du corps de carter (1) se faisant à un tour à emboutir en une opération de formage par emboutissage, **caractérisé en ce que** ledit compartiment de travail (5) comprend une paroi arrière (15), une paroi latérale intérieure (17) reliée, de façon intégrale, à ladite paroi arrière (15), et une paroi latérale extérieure (19) reliée, de façon intégrale, à ladite paroi latérale arrière, dans lequel, dans une étape intermédiaire, toutes les parties de paroi dudit compartiment de travail (5) sont obtenues par un procédé de fendage dudit rond de tôle (7).

2. Procédé selon la revendication 1, **caractérisé par** les étapes opératoires suivantes:
a) le rond de tôle (7) est serré entre deux mandrins (21, 23) du tour à emboutir et est mis en rotation avec ceux-ci;
b) le rond de tôle (7) est divisé, à partir de son pourtour extérieur, au moyen d'un outil de fendage, sur une partie de son extension radiale, en deux sections (31, 33) de rond, en forme de disques annulaires, qui restent reliées l'une à l'autre au fond de la fente et
c) les sections (31, 33) de rond sont ensuite soumises à un formage sur le tour à emboutir d'une manière formant le compartiment de travail (5) du corps de carter (1).

3. Procédé selon la revendication 2, **caractérisé en ce que** l'usinage des ronds de tôle (7) se fait entre deux mandrins, réalisés sous la forme d'un mandrin à emboutir et d'un mandrin de serrage, d'extensions radiales différentes, de telle manière que, lors du fendage qui suit selon l'étape partielle b du procédé, l'une des sections (31, 33) du rond est repliée en direction du mandrin de plus courte dimension radiale et le formage qui suit est effectué par emboutissage, selon l'étape partielle c du procédé, sur le contour extérieur du mandrin radialement plus court, à savoir le mandrin à emboutir, tandis que la section de rond, tournée vers le mandrin radialement plus long, reste dans son extension radiale au cours de l'étape partielle b du procédé.

4. Procédé selon la revendication 2, **caractérisé en ce que** le fendage en deux sections (31, 33) de rond se fait à l'aide d'un galet coupant (27) qui tourne et qui se déplace simultanément radialement vers l'intérieur en direction du rond de tôle.

5. Procédé selon la revendication 2 ou 3, **caractérisé en ce que** la section (33) du rond, qui est appliquée, après le fendage, sur le contour extérieur du mandrin plus court radialement, est formé au moyen d'un galet à emboutir (35), perpendiculairement au rond de tôle (7), après quoi une partie est détachée au moyen d'un galet coupant (37) selon l'extension axiale du mandrin de la section (33) du rond, si bien que la section du rond subsiste comme paroi latérale intérieure (17) du compartiment de travail (5), devant être réalisé du corps de carter.

6. Procédé selon la revendication 5, **caractérisé par** les autres étapes opératoires suivantes:
après le détachement par découpage de la partie de la section de rond, qui déborde, le mandrin qui supporte cette section (33) de rond lors du formage qui précède, est remplacé, lors d'un changement de serrage, par un mandrin (41) qui reçoit, dans un évidement, la section (33) du rond qui s'étend perpendiculairement au rond de tôle (7) et qui possède une extension radiale telle que la section (31) du rond, qui subsiste dans le sens radial, soit déformée au moyen d'un galet à emboutir (47) sur le pourtour extérieur du mandrin de telle manière que la paroi latérale extérieure (19) du compartiment de travail (5) soit réalisée.

7. Procédé selon l'une des revendications précédentes, **caractérisé par** les autres étapes opératoires suivantes:
a) après le formage de la section extérieure (31) du rond, constituant la paroi latérale extérieure (19), qui met fin au façonnage du compartiment de travail (5), le corps de carter (1) est retiré du serrage des mandrins;
b) un anneau sismique est mis en place dans le compartiment de travail qui existe entre la paroi latérale intérieure et la paroi latérale extérieure, après quoi un couvercle (3) de forme annulaire, de préférence découpé à la presse, est posé sur la face ouverte du compartiment de travail (5) et est relié à celui-ci, de manière connue, par soudage; et
c) ensuite, du liquide d'amortissement visqueux est introduit dans le compartiment de travail (5) par une ouverture de remplissage qui se trouve dans le couvercle (3), après quoi on ferme l'ouverture.

8. Procédé selon l'une des revendications précédentes, **caractérisé en ce que** le pourtour extérieur de corps de carter (1) est réalisé sous la forme d'une poulie à courroie trapézoïdale, de préférence au cours du procédé de formage sous forme d'une poulie à courroie à profil trapézoïdal multiple.
